# EUROPEAN PATENT APPLICATION

(11) **EP 1 326 249 A2**
(43) Date of publication of application: **09.07.2003**
(21) Application number: 03250004.3
(22) Date of filing: 02.01.2003
(51) Int. Cl.: G11B 33/12

(54) **A holder for electrical apparatus**

(30) Priority: 04.01.2002 GB 0200138
(71) Applicant: Pace Micro Technology PLC, Saltaire, Shipley, BD18 3LF (GB)
(72) Inventor: Walshaw, James, Shipley BD18 3LF (GB); Kirby, Keith, Shipley BD18 3LF (GB)
(74) Representative: Wood, Graham

(57) **Abstract**

A hard disk drive mounting cradle (2) is provided for location with a housing or frame of electrical apparatus, such as a broadcast data receiver (BDR). The mounting cradle (2) supports a hard disk drive (3) within the electrical apparatus during use. The hard disk drive (3) contains heat producing electrical components mounted therein and the cradle (2) is provided with heat conducting members protruding from a surface thereof for directly or indirectly contacting the heat producing electrical components. The heat conducting members conduct heat away from the electrical components and the mounting cradle (2).

## Description

The present invention relates to a holder or cradle for location in or with a housing or frame of electrical apparatus, and particularly but not exclusively to a mounting cradle for a hard disk drive for location in electrical apparatus.

It is well known that electronic components of electrical apparatus generate heat when in use. An increase of temperature within the apparatus which exceeds the specified working temperature range thereof is likely to result in reduced performance of the apparatus and/or components of the apparatus.

Conventional methods of reducing the temperature or maintaining the temperature of electrical apparatus within specified ranges include the use of fans or heat dissipation chimneys within the apparatus. These methods typically require valuable space within the apparatus and are expensive. In the applicant's co-pending application EP1107657, the provision of one or more heatsinks in the housing of the electrical apparatus to dissipate heat away from the apparatus is disclosed. The heatsinks are provided as raised platforms integrally formed from the sheet material of the housing with thermally conductive material mounted on the platforms to conduct heat away from the electrical components.

Whilst the above described method is sufficient to reduce heat from components located a small pre-determined distance from a surface of the apparatus housing, if the pre-determined distance becomes larger, the method described in EP1107657 can become impractical. Thus for electronic components which are required to be located nearer the centre of the housing rather than adjacent the interior walls, the heat dissipation means in EP1107657 may not be sufficient or practical for maintaining the temperature in the locality of the component within the required working temperature range. In addition, it may not be practical to have heat cooling recesses/platforms provided at a particular location in the housing due to space restrictions and/or the like.

For example, a hard disk drive of a set top box or broadcast data receiver is required to be located a spaced distance from the surface of the housing of the receiver to reduce the noise generated therefrom. This is achieved by using a cradle in which to mount the hard disk drive. The heat dissipation method of providing a raised platform in the apparatus housing is likely to be insufficient to dissipate heat from the cradle.

It is therefore an aim of the present invention to provide heat dissipation means for electrical components or units which are required to be located in a holder to maintain the components a spaced distance from the interior surfaces of the housing of the apparatus.

According to a first aspect of the present invention there is provided a holder for location with a housing or frame of electrical apparatus, said holder having one or more heat producing electrical components mounted thereon, characterised in that the holder includes at least one heat conducting member protruding from a surface thereof for directly or indirectly contacting said electrical component or components, said at least one heat conducting member conducting heat away from said electrical component(s) and said holder when said electrical apparatus is in use.

Preferably heat transfer material is provided between said at least one heat conducting member and said electrical component or components. The at least one heat conducting member and the heat transfer material conducts heat away from the electrical components and the holder when the electrical apparatus is in use.

Preferably the heat conducting members are integrally formed with the holder. For example, in one embodiment the heat conducting members and holder are integrally formed by die casting from aluminium. However, one or more of the heat conducting members can be attached to the holder if required. The members can also be detachably attached to allow movement of the members to locations on the cradle where most heat dissipation is required.

Preferably the holder has location means for locating the same at a required location in, on, with or relative to the housing or frame of the electrical apparatus.

In one embodiment the location means includes one or more mounting pillars which maintain the main body of the holder in spaced relationship from the housing of the electrical apparatus. The one or more mounting pillars typically extend downwardly from the base of the holder and locate on the base of the electrical apparatus. Location ports in the form of apertures or recesses can be provided on the base of the apparatus to allow engagement of said pillars therein.

Alternatively, or in addition, one or more supporting arm members are provided for supporting the holder at a required position in said electrical apparatus. The supporting arms can be provided between the holder and the side walls, base, or top of the housing or frame of the electrical apparatus, or can be connected to some other component within the electrical apparatus.

Preferably one or more supporting foot members are provided on the location means. The supporting foot members protrude from a surface of the location means to contact a surface of the electrical apparatus or further electrical component within the apparatus.

In one embodiment the holder is a hard disk drive mounting cradle for location in the housing of an electrical device, such as a set top box or broadcast data receiver.

Preferably a plurality of heat conducting members are provided at a number of spaced locations on the holder.

Preferably the heat conducting members are in the form of finger like protrusions, thereby providing a large surface area from which heat can be dissipated. The position of the members correspond to the position of Integrated Circuit (IC) boards or other electronic components located thereon, such as a motor for use with a hard disk drive or for use with the electrical apparatus.

Preferably the heat conducting members protrude outwardly from one or more surfaces of the holder.

In one embodiment the holder is mounted via the mounting pillars on the base of the electrical apparatus such that a pre-determined space exists between the base of the holder body and the base of the apparatus. In addition to, or as an alternative, the holder can be mounted so as to form a pre-determined space between one or more further surfaces of the holder and one or more surfaces of the apparatus.

Preferably the heat conducting members protrude downwardly from the base of the holder body into said pre-determined space and/or upwardly to make contact directly or indirectly with the ICs of the hard disk drive or other electrical component(s).

Preferably the holder is provided with securing means for securing the hard disk drive or other electrical component to the holder when the electrical apparatus is constructed. The securing means can include any or any combination of nuts and bolts, clips, screws, adhesive, welding and/or the like.

Preferably the heat transfer material includes one or more gel pads.

According to a second aspect of the present invention there is provided a hard disk drive mounting cradle for location with a housing or frame of electrical apparatus, said mounting cradle for supporting a hard disk drive within the electrical apparatus and said hard disk drive containing one or more heat producing electrical components mounted therein, characterised in that said mounting cradle includes at least one heat conducting member protruding from a surface thereof for directly or indirectly contacting the heat producing electrical component or components, said at least one heat conducting member conducting heat away from said electrical component(s) and said mounting cradle.

According to a further aspect of the present invention there is provided electrical apparatus having a holder located therein, said holder having one or more heat producing electrical components mounted thereon, characterised in that the holder includes at least one heat conducting member protruding from a surface thereof for directly or indirectly contacting said electrical component or components, said at least one heat conducting member conducting heat away from said electrical component(s) and said holder when said electrical apparatus is in use.

An advantage of the present invention is that the heat sinks provided by the heat conducting members of the holder rapidly conduct heat away from the hard disk drive and its electrical components in addition to any further heatsink(s) provided in the housing of the electrical apparatus. As the holder is mounted in spaced relationship from the housing of the apparatus, the heat conducting members can protrude in opposite directions from the holder to maximise the conductance of heat from the electrical components.

The heat sinks maintain the hard disk drive at an acceptable working temperature, thereby removing or minimising the requirement for a cooling fan or other heat dissipation means to be provided in the housing of the electrical apparatus.

Embodiments of the present invention will now be described with reference to the accompanying figures wherein:
Figures 1 and 2 are perspective views of an embodiment of the present invention from above;
Figure 3 is a perspective view of the underside of the cradle in Figure 1;
Figure 4 is an end view of the cradle with a hard disk drive located therein;
Figure 5 is a plan view of the cradle and hard disk drive shown in figure 4;
Figure 6 is a section taken along lines A-A in Figure 5;
Figure 7a shows a further embodiment of the present invention from above;
Figure 7b shows an underside view of the cradle in figure 7a;
Figure 7c is a detailed view of securing means shown in the dotted circle A for the cradle shown in figure 7g;
Figure 7d is a cross sectional view along line A-A of the cradle in figure 7h;
Figure 7e is a detailed view of part of the location means shown in the dotted circle B for the cradle in figure 7g;
Figure 7f is a plan view of the underside of the cradle in figure 7a;
Figure 7g is an end view of the cradle in figure 7a;
Figure 7h is a plan view of the top of the cradle in figure 7a; and
Figure 7i is a detailed cross sectional view of part of the location means shown in the dotted circle C for the cradle in figure 7d.

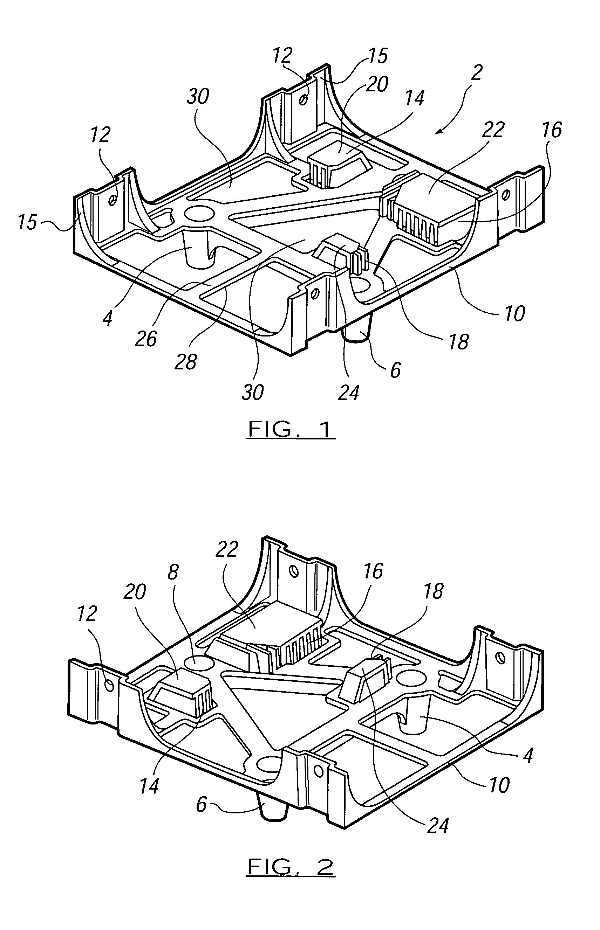

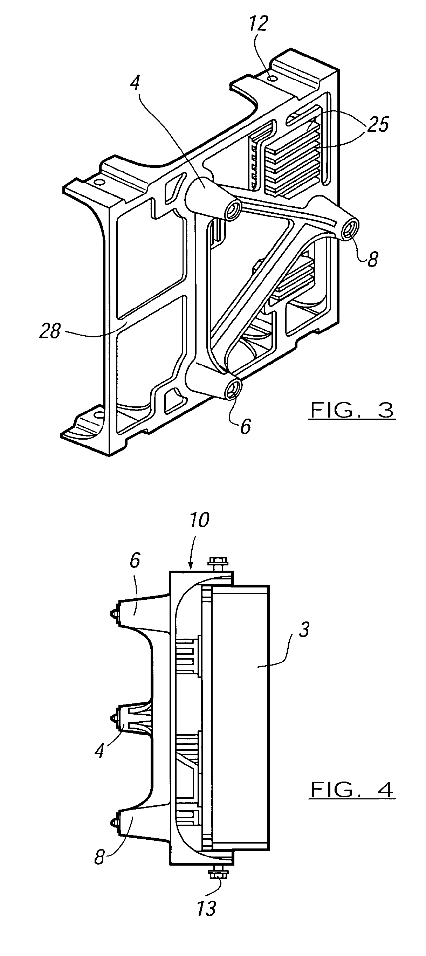

Referring firstly to figures 1-6, there is provided a cradle 2 for the mounting of a hard disk drive 3 therein. The cradle and hard disk drive 3 are located in a housing or frame of a broadcast data receiver (BDR) when in use, as shown in figures 4-6.

The BDR receives digital data from a broadcaster at a remote location and decodes and processes said data to provide audio, video and/or auxiliary data for viewing on a television display screen connected to the BDR or forming a part thereof and/or for listening via speakers.

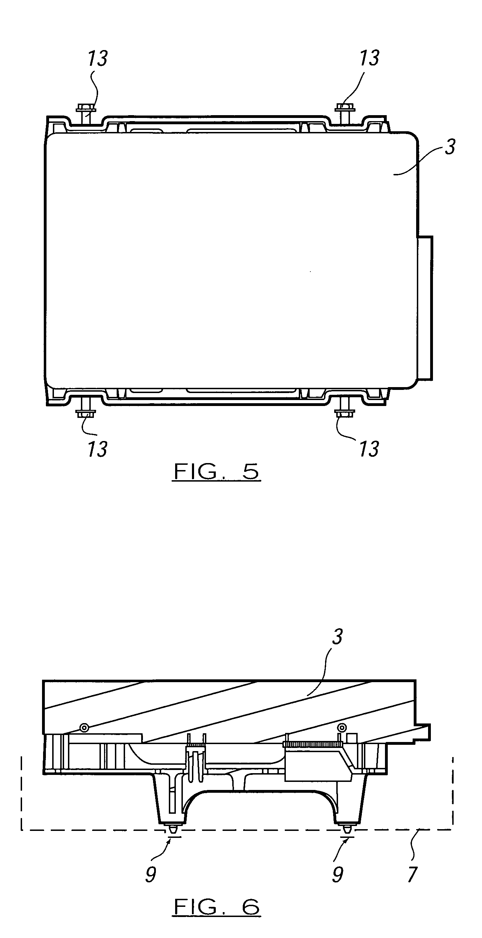

The cradle 2 is provided with three mounting pillars 4, 6, 8 for positioning the cradle at a pre-determined position in the BDR, and typically for mounting the cradle body 10 and thus the hard disk drive 3 in a spaced relationship from the base of the BDR housing. The base of the BDR housing typically has location recesses or apertures 9 in which the mounting pillars can locate, as indicated in part by dotted line 7 in figure 6.

The cradle 2 is further provided with securing means in the form of hard disk drive mounting apertures 12 for the location of securing screws 13 for fixing the disk drive 3 to the cradle 2 in use. The mounting apertures 12 are defined in upwardly protruding arms 15, which act as a frame to provide further support for the hard disk drive.

Heatsinks 14, 16 and 18 are provided in the cradle to conduct heat away from the disk drive. The heatsinks are located at pre-determined positions corresponding to the position of electrical components (not shown) in or on the hard disk drive 3.

Heat transfer gel pads 20, 22 and 24 are located between heatsinks 14, 16 and 18 respectively and the electrical components of the hard disk drive or hard disk drive housing.

The heatsinks comprise a number of finger-like members 25 which protrude upwardly from the upper base surface 26 of the cradle body 10 and downwardly below the lower base surface 28 of body 10. This maximises the heat transfer from the components of the hard disk drive and into other areas of the BDR. The finger like members are spaced a pre-determined distance apart from each other which is sufficient to allow heat dissipation.

The mounting pillars 4, 6, 8 also act as heat conducting members to conduct heat from the cradle to the housing of the BDR.

The heatsinks 14, 16 and 18 are integrally formed with the cradle by die casting, typically from a lightweight material such as aluminium. Apertures 30 are provided in the cradle to reduce the amount of material required to mount the disk drive in the BDR.

The heat transfer material can be formed as an integral part of the heat conducting members. The longitudinal dimensions of the heat conducting members are typically substantially larger than the cross-sectional dimensions, thereby providing a larger surface area for heat conductance.

The cradle 2 also integrates the mechanical compliance/damping required to reduce the effects that the torque generated by the hard disk drive voice coil has on the registration of the read/record head.

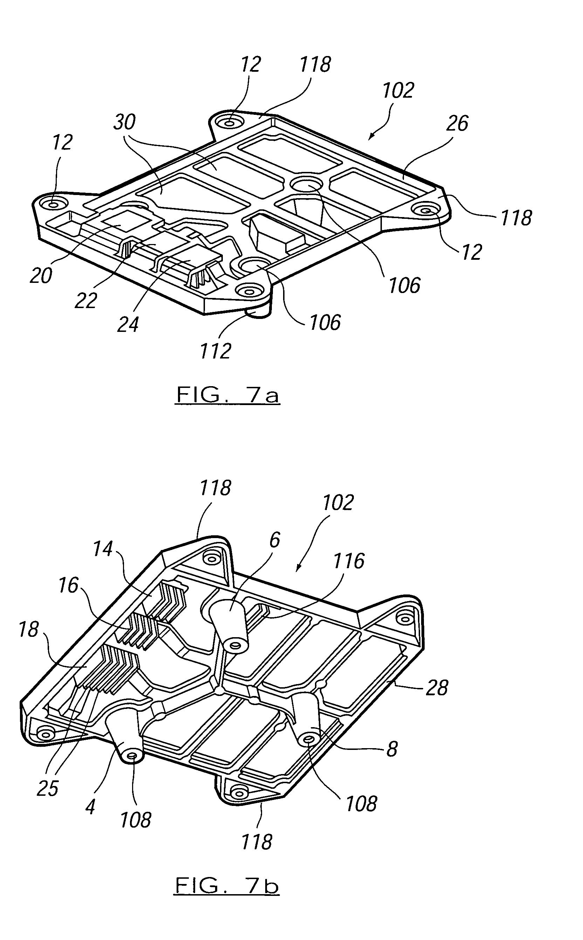

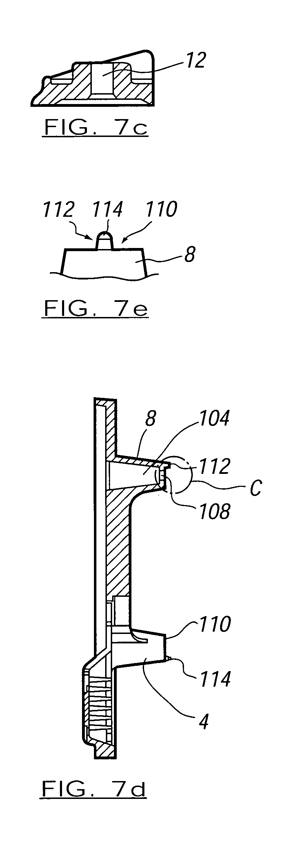

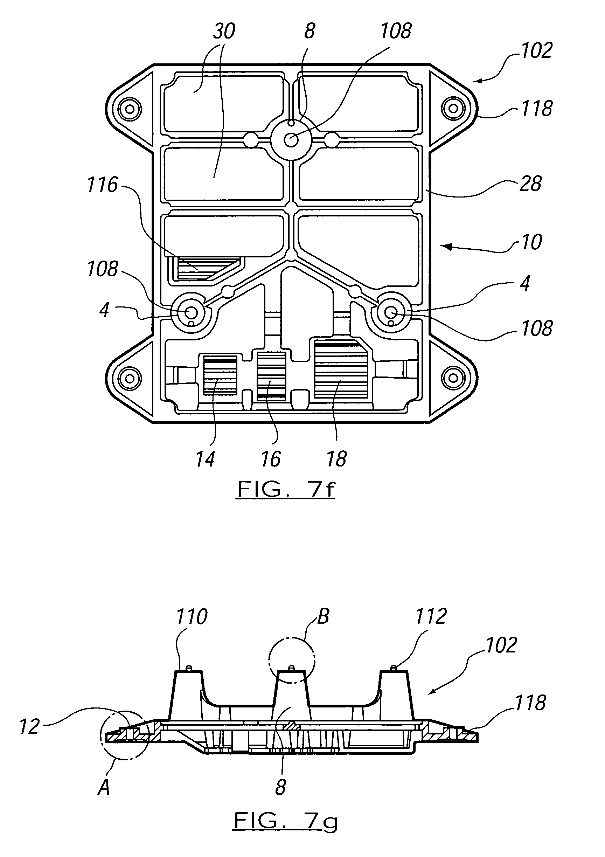

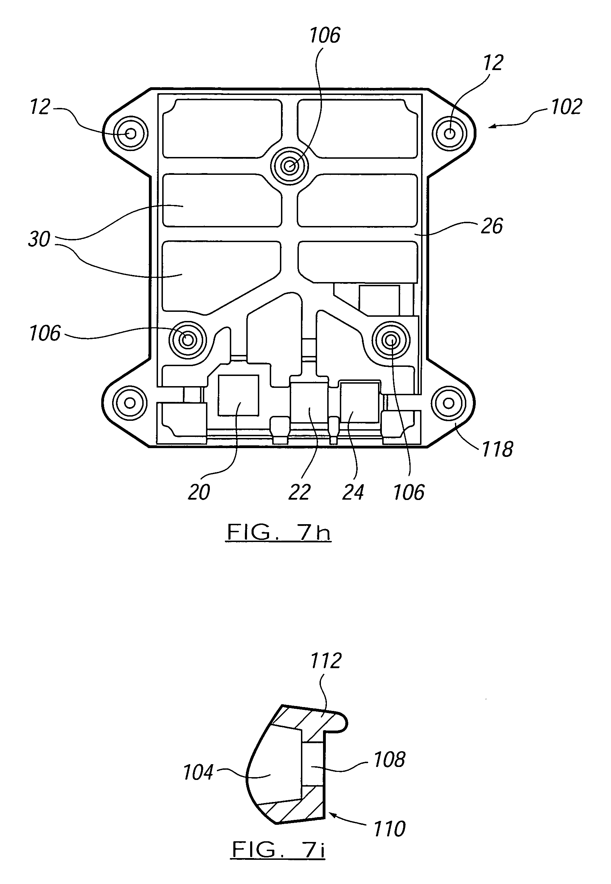

Referring to figures 7a-7i, there is illustrated a cradle 102 according to a further embodiment of the present invention. The same reference numerals are used in these figures to identify the same components of the cradle as in figures 1-6.

The mounting pillars 4, 6, 8 have a channel 104 therethrough with an opening 106 on the top surface 26 of the cradle and an opening 108 on the underside surface 28 of the cradle. The provision of channel 104 through the mounting pillars reduces the amount of material required to form the same and provides a larger surface area for heat dissipation. A protruding foot member 112 is provided at end 110 of each mounting pillar to allow improved location of the pillars in corresponding recesses in the housing of the BDR. A rubber cap 114 can be provided on the foot member to prevent slipping of the holder relative to the housing and to reduce vibration and/or noise.

Heatsinks 14, 16, 18 are provided in different locations on the cradle 102 compared to the cradle 2 due to different arrangements of electrical components requiring heat dissipation therefrom. An additional heat sink 116 is also provided in cradle 102. The finger like protrusions 25 are typically in the form of sheet like plates located a pre-determined spaced distance apart from each other.

Mounting apertures 12 are defined in arms 118 protruding from the main body 10 of cradle 102 for securing a hard disk drive or other electrical component thereto. Arms 118 are substantially planar with upper surface 26 of cradle 102.

Apertures 30 are also provided on cradle 102 but are provided in greater number and different positions than the apertures provided in cradle 2. The apertures are typically located according to where minimum support is required for the one or more electrical components mounted on the cradle.

Thus it will be appreciated by persons skilled in the art that the holder of the present invention can be used in any number of different electrical devices for mounting components or units in the housing or frame of the device, in addition to any additional heatsinks or heat conducting means provided in the housing of the device. The number and size of the heatsinks can be varied according to the number and size of the components with which the heatsinks directly or indirectly contact.

## Claims

1. A holder (2) for location with a housing or frame of electrical apparatus, said holder (2) having one or more heat producing electrical components (3) mounted thereon, **characterised in that** the holder (2) includes at least one heat conducting member (14, 16, 18) protruding from a surface thereof for directly or indirectly contacting said electrical component or components (3), said at least one heat conducting member (14, 16, 18) conducting heat away from said electrical components (3) and said holder (2) when said electrical apparatus is in use.

2. A holder according to claim 1 **characterised in that** heat transfer material is provided between said at least one heat conducting member (14, 16, 18) and said one or more electrical components (3).

3. A holder according to claim 2 **characterised in that** the heat transfer material includes one or more gel pads (20, 22, 24).

4. A holder according to claim 1 **characterised in that** the heat conducting members are integrally formed with the holder (2).

5. A holder according to claim 1 **characterised in that** the heat conducting members are detachably attached to the holder (2).

6. A holder according to claim 1 **characterised in that** the holder (2) is formed from aluminium.

7. A holder according to claim 1 **characterised in that** location means are provided for locating the holder (2) at a required location in the housing or frame of the electrical apparatus.

8. A holder according to claim 7 **characterised in that** the location means include one or more mounting pillars (4, 6, 8) extending downwardly from the base (28) of the holder (2).

9. A holder according to claim 7 **characterised in that** the location means include one or more supporting arms provided between the holder and any or any combination of side walls, base, top of the electrical apparatus or other electrical component provided in said apparatus.

10. A holder according to claim 7 **characterised in that** the location means are further provided with one or more supporting foot members (112).

11. A holder according to claim 10 **characterised in that** said support foot members (112) protrude from a surface of the location means to contact a surface of the electrical apparatus or further electrical component within the apparatus.

12. A holder according to claim 1 **characterised in that** a plurality of heat conducting members are provided at spaced locations on the holder.

13. A holder according to claim 12 **characterised in that** the position of heat conducting members on the cradle correspond to the position of integrated circuit boards or other heat generating electrical components.

14. A holder according to claim 1 **characterised in that** the heat conducting members are in the form of finger like protrusions (25).

15. A holder according to claim 1 **characterised in that** the heat conducting members are formed from sheet material.

16. A holder according to claim 1 **characterised in that** the heat conducting members protrude outwardly from one or more surfaces of the holder.

17. A holder according to claim 1 **characterised in that** a pre-determined space is defined between one or more surfaces of the holder and one or more surfaces of the electrical apparatus.

18. A holder according to claim 17 **characterised in that** the heat conducting members protrude downwardly from the base of the holder (28) into said pre-determined space.

19. A holder according to claim 17 **characterised in that** the heat conducting members protrude upwardly to contact directly or indirectly with the one or more electrical components in the apparatus.

20. A holder according to claim 1 **characterised in that** securing means are provided for securing the one or more electrical components to the holder (2).

21. A holder according to claim 20 **characterised in that** the securing means include any or any combination of nuts and bolts, clips, screws (13), adhesive or welding.

22. A holder according to claim 1 **characterised in that** the holder is a hard disk drive mounting cradle for location in an item of electrical apparatus.

23. A holder according to claim 1 **characterised in that** the electrical apparatus is a broadcast data receiver.

24. A hard disk drive mounting cradle (2) for location with a housing or frame of electrical apparatus, said mounting cradle (2) for supporting a hard disk drive (3) within the electrical apparatus and said hard disk drive (3) containing one or more heat producing electrical components mounted therein, **characterised in that** said mounting cradle (2) includes at least one heat conducting member protruding from a surface thereof for directly or indirectly contacting the heat producing electrical component or components, said at least one heat conducting member conducting heat away from said electrical component(s) and said mounting cradle (2).

25. Electrical apparatus, said electrical apparatus having a holder (2) located therein, said holder (2) having one or more heat producing electrical components mounted thereon, **characterised in that** the holder includes at least one heat conducting member protruding from a surface thereof for directly or indirectly contacting said electrical component or components, said at least one heat conducting member conducting heat away from said electrical component(s) and said holder when said electrical apparatus is in use.
